# FASCICULE DE BREVET EUROPEEN

(11) **EP 2 211 671 B1**
(45) Date de publication et mention de la délivrance du brevet: **26.12.2018**
(21) Numéro de dépôt: 08853688.3
(22) Date de dépôt: 14.11.2008
(51) Int. Cl.: A47J 36/02

(54) **ARTICLE CULINAIRE COMPRENANT UN REVÊTEMENT ANTIADHÉSIF RÉSISTANT À LA CORROSION ET À LA RAYURE**
KOCHARTIKEL MIT KORROSIONSBESTÄNDIGER UND KRATZFESTER ANTIHAFTBESCHICHTUNG
CULINARY ARTICLE HAVING A CORROSION-RESISTANT AND SCRATCH-RESISTANT NON-STICK COATING

(30) Priorité: 16.11.2007 FR 0759122
(43) Date de publication de la demande: 04.08.2010
(73) Titulaire: SEB S.A., 69130 Ecully (FR)
(72) Inventeur: MULLER, Pierre-Jean, 74540 Saint Felix (FR); VOISIN, Laurent, 74150 Sales (FR)
(74) Mandataire: Regimbeau
(86) Numéro de dépôt international: PCT/FR2008/052058
(87) Numéro de publication internationale: WO 2009/068832

(56) Documents cités:
- WO-A-00/56537
- FR-A- 2 179 526
- FR-A- 2 897 252
- US-A- 4 250 215

## Description

La présente invention concerne de manière générale un article culinaire, dont le fond présente une face intérieure renforcée et pourvue d'un revêtement antiadhésif, avec des propriétés élevées de résistance à la corrosion et à la rayure.

La manière de fabriquer l'article culinaire avec sa face intérieure renforcée est également concernée.

De manière classique, on utilise, à titre de revêtement antiadhésif sur la face intérieure d'un article culinaire, un revêtement à base de résine fluorocarbonée (par exemple du PTFE) frittée. De tels revêtements sont connus non seulement pour leurs propriétés antiadhésives, mais également pour leur résistance à des agressions de type chimique ou thermique.

Plus généralement, les articles culinaires dont le fond présente sur leur face intérieure un revêtement antiadhésif ont l'avantage d'être facilement nettoyables et de permettre de cuire des aliments avec peu, voire pas de matière grasse. Toutefois, de tels articles présentent l'inconvénient majeur que le revêtement antiadhésif est fragile.

Par revêtement fragile, on entend, au sens de la présente invention, un revêtement qui est susceptible d'être rayé suite à une agression de type mécanique comme celle provoquée par un frottage trop vigoureux du revêtement à l'aide d'un tampon abrasif, ou encore qui ne protège pas suffisamment un support de type en aluminium ou en alliage d'aluminium des agressions chimiques provoquées par des détergents de lave-vaisselle.

Pour remédier à cet inconvénient majeur et obtenir un revêtement antiadhésif dont les propriétés mécaniques sont renforcées, il est connu de l'homme du métier de réaliser un revêtement antiadhésif multicouches, dont la première couche rencontrée à partir du fond de l'article (couramment appelée « couche de primaire ») et servant d'accrochage à une ou plusieurs couches supérieures du revêtement antiadhésif (couramment appelées couches de finition) contient, outre la résine fluorocarbonée frittée, une teneur élevée en charges minérales ou organiques dures (par exemple de la silice, du quartz ou de l'aluminium).

Toutefois, ce type de renforcement reste nécessairement limité car la teneur en charges dans la couche de primaire ne peut dépasser quelques pourcents en poids du poids total de la couche de primaire. Au-delà d'une certaine quantité seuil de charges, typiquement au-delà de 15% en poids de charges dans la couche de primaire, celle-ci peut perdre sa cohésion.

Par ailleurs, il est également connu de l'homme du métier de former une sous-couche dure ou une base dure entre le support (en l'occurrence la face intérieure d'un article culinaire) et le revêtement antiadhésif (notamment la couche de primaire).

La réalisation d'une sous-couche dure ou d'une base dure entre le support et le revêtement antiadhésif permet non seulement de renforcer mécaniquement le revêtement antiadhésif (notamment en termes de dureté), mais également de lui conférer une résistance élevée à la rayure.

La sous-couche ou la base dure forme une barrière qui empêche que les rayures n'atteignent la surface du support.

On connaît des sous-couches dures formées par un polymère tel que le polyamide imide (PAI) et/ou l'oxy-1,4-phénylène-oxy-1,4 phénylène-carbonyle-1,4-phénylène (PEEK), comme l'enseignent les demandes internationales WO 00/54895 et WO 00/54896 au nom de la demanderesse.

Par ailleurs, on connaît des bases dures métalliques ou en alumine. Si la base dure est formée d'alumine, elle peut être déposée, par pulvérisation thermique, sur le support, constitué en l'occurrence par la face intérieure du fond de l'article. Dans le cas particulier d'un support en aluminium ou en alliage d'aluminium, une base dure d'alumine peut également être formée directement à partir du support par oxydation anodique de celui-ci. Ainsi, le brevet européen EP0902105 décrit un revêtement antiadhésif déposé sur une telle base dure, qui présente une résistance à la rayure et à l'abrasion élevée. Toutefois, ce revêtement antiadhésif présente l'inconvénient de ne pas être suffisamment résistant à la corrosion, ni au clivage. De plus, la formation d'alumine, en particulier par le procédé d'anodisation dite dure, est très coûteuse sur le plan énergétique, car il faut fournir des puissances électriques élevées pour maintenir des températures basses dans les bains d'anodisation.

On connaît également une base dure métallique qui est réalisée sur la surface intérieure d'un article culinaire pour renforcer la couche revêtement antiadhésive. Ainsi, le brevet US 5,455,102 décrit un article culinaire comprenant une calotte métallique, dont la surface intérieure rendue rugueuse est recouverte successivement, à partir du fond de la calotte, par une couche dure métallique (notamment en acier, en cuivre ou en aluminium) qui résiste à l'abrasion, et une couche lubrifiante essentiellement constituée de PTFE. La couche dure anti-abrasive présente une épaisseur entre 40 et 90 pm avec une rugosité arithmétique moyenne (Ra) entre 5 pm et 8 pm. La couche lubrifiante à base de PTFE est appliquée par des techniques de pulvérisation connues, tandis que la couche dure anti-abrasive est formée par pulvérisation par arc électrique. La formation d'une telle couche dure présente toutefois l'inconvénient de nécessiter l'utilisation d'un équipement de dépôt onéreux (arc électrique), qui est en outre consommateur d'énergie et peu productif. L'utilisation d'un métal différent est également source de difficultés nouvelles en créant un couple électrolytique générateur d'un amoindrissement de la tenue à la corrosion.

La demande internationale WO00/56537 décrit un article culinaire comprenant un support métallique en aluminium présentant une face intérieure concave destinée à être disposée du côté des aliments et une face extérieure convexe destinée à être disposée vers une source de chaleur, ladite face intérieure étant revêtue successivement à partir dudit support, d'une base dure et d'un revêtement antiadhésif recouvrant ladite base dure, ledit revêtement antiadhésif comportant au moins une couche comprenant au moins une résine fluorocarbonée formant un réseau continu fritté, ladite base dure étant une couche d'émail rugueuse.

La demanderesse a maintenant trouvé que la formation entre la surface intérieure de l'article et le revêtement antiadhésif d'une base dure rugueuse en émail discontinue permet d'obtenir un revêtement antiadhésif qui présente à la fois des propriétés améliorées d'adhérence au support et des propriétés de résistance à la corrosion et à la rayure, sans que cela nécessite la mise en place d'un équipement à la fois complexe, onéreux et consommateur d'énergie et susceptible de générer de la corrosion.

Plus particulièrement, la présente invention a pour objet un article culinaire comprenant un support métallique présentant une face intérieure concave destinée à être disposée vers les aliments susceptibles d'être introduits dans ledit article et une face extérieure convexe destinée à être disposée vers une source de chaleur, ladite face intérieure étant revêtue successivement à partir dudit support d'une base dure, puis d'un revêtement antiadhésif recouvrant ladite base dure, ledit revêtement antiadhésif comportant au moins une couche comprenant au moins une résine fluorocarbonée seule ou en mélange avec une résine d'accrochage thermostable et résistant à au moins 200°C, cette (ces) résine(s) formant un réseau continu fritté.

Selon l'invention, la base dure est une couche d'émail rugueuse comportant moins de 50 ppm de plomb et moins de 50 ppm de cadmium et est une couche discontinue comprenant une dispersion superficielle de gouttes (31) d'émail réparties de manière homogène sur la face intérieure de l'article, avec un taux de recouvrement de la face intérieure (21) compris entre 40% et 80%, une densité surfacique comprise entre 300 gouttes/mm² et 2000 gouttes/mm², et une taille de gouttes comprise entre 2 pm et 50 µm, ladite couche d'émail présentant les caractéristiques suivantes :
- une dureté supérieure à celle du métal ou de l'alliage métallique constitutif du support,
- un point de fusion compris entre celui du métal ou de l'alliage métallique constitutif du support et celui de la (ou des) résine(s) frittées du revêtement antiadhésif, et
- une rugosité de surface Ra comprise entre 2 µm et 50 pm.

De préférence, le point de fusion de la base dure 3 est compris entre une température qui est supérieure de 50°C à la température de fusion la plus élevée des résines frittées du revêtement antiadhésif, et une température inférieure de 10°C à la température de fusion du métal ou de l'alliage métallique constitutif du support.

Par rugosité de surface Ra, on entend, au sens de la présente invention, l'écart moyen arithmétique entre les creux et les pics de la surface par rapport à la ligne médiane (ou moyenne), cet écart étant estimé selon la Norme ISO 4287.

On observe qu'une telle base dure disposée entre le support et le revêtement antiadhésif, conduit à une amélioration significative des performances physiques, chimiques et mécaniques du revêtement antiadhésif.

Ainsi, la résistance à l'abrasion est multipliée par au moins cinq par rapport au même revêtement antiadhésif sans base dure émaillée, tout en conservant ses propriétés antiadhésives.

La présente invention a également pour objet un procédé comprenant les étapes suivantes :
- a) fourniture d'un support, présentant la forme finale de l'article culinaire avec une face intérieure concave destinée à être disposée du côté des aliments susceptibles d'être introduits dans ledit article, et une face extérieure convexe destinée à être disposée du côté d'une source de chaleur ;
- b) traitement de surface de la face intérieure du support, pour obtenir une face intérieure (21) traitée adaptée à l'adhérence d'une base dure sur le support ;
- c) réalisation d'une base dure sur la face intérieure dudit support laquelle base dure (3) est une couche discontinue comprenant une dispersion superficielle de gouttes (31) d'émail réparties de manière homogène sur la face intérieure (21), avec un taux de recouvrement de la face intérieure (21) compris entre 40% et 80%, une densité surfacique comprise entre 300 gouttes/mm² et 2000 gouttes/mm², et une taille de gouttes comprise entre 2 pm et 50 pm; puis
- d) réalisation d'un revêtement antiadhésif sur ladite couche dure formée à l'étape c), comprenant le dépôt d'au moins une couche de composition à base de résine fluorocarbonée, puis la cuisson de cette couche à une température entre 370°C et 430°C, de préférence de l'ordre de 415°C.

Selon l'invention, l'étape c) de réalisation de la base dure comprend les étapes successives suivantes :
- c1) préparation d'une barbotine aqueuse de fritte d'émail, ladite fritte d'émail présentant moins de 50 ppm de cadmium et moins de 50 ppm de plomb, et comportant 30 à 40% en poids de silice et 15 à 30% en poids d'oxyde de titane, moins de 10% en poids d'oxyde de vanadium et moins de 4% en poids de d'oxyde de lithium par rapport au poids total de la fritte, ladite barbotine aqueuse comportant au moins 20% en poids de charges minérales par rapport au poids total de barbotine ;
- c2) application de la barbotine aqueuse formée à l'étape c1) par pulvérisation de la barbotine sur la face intérieure du support, puis séchage pour former une couche d'émail non cuite ;
- c3) cuisson de ladite couche d'émail à une température comprise entre 540 et 580°C pendant au moins 3 minutes, la cuisson de la couche d'émail étant réalisée avant celle du revêtement antiadhésif.

A la différence d'un procédé par arc électrique ou par projection de plasma, on n'applique pas, dans la présente invention, un composé homogène dont la structure après durcissement est déterminée par sa composition chimique initiale avant durcissement. En effet, dans la présente invention, on applique une barbotine aqueuse de fritte d'émail et on observe que lors de la cuisson se produit une homogénéisation des différents éléments fusibles de la barbotine, ceux provenant de la fritte d'émail et ceux provenant de sa formulation en barbotine. Dans la présente invention, il n'y a donc pas de correspondance univoque entre la composition de la barbotine et la structure de l'émail formé après application et cuisson de cette barbotine.

Etant donné que l'émail de la base dure a un point de fusion élevé, qui est compris entre celui de la (ou des) résine(s) frittée(s) du revêtement antiadhésif et celui du matériau constitutif du support métallique, la cuisson de la couche d'émail doit nécessairement être réalisée avant la formation du revêtement antiadhésif, car la cuisson de la base dure émaillée doit être réalisée à une température élevée, qui est généralement comprise entre 540 et 580°C pour assurer une bonne cohésion de l'émail. Or, à ce niveau de température, il existe un risque important que la résine fluorocarbonée, et le cas échéant la résine thermostable, soient très fortement dégradées ou pyrolysées. Il n'est donc pas possible de réaliser un article culinaire selon l'invention avec une seule étape de cuisson pour la cuisson simultanée de la base dure émaillée et du revêtement antiadhésif.

Le procédé de la présente invention présente l'avantage de mettre en oeuvre une barbotine aqueuse de fritte d'émail qui ne comprend pas de solvants et donc ne génère pas de COV, et la fritte d'émail utilisée dans le procédé selon l'invention ne contient quasiment pas d'éléments nocifs tels que le plomb ou le cadmium ou seulement à l'état de traces (au plus 50 ppm d'un élément nocif), de sorte que l'émail ainsi obtenu respecte la législation dans le domaine alimentaire tant au niveau de la formulation de la fritte d'émail, qu'au niveau de la formulation de la barbotine.

D'autres avantages et particularités de la présente invention résulteront de la description qui va suivre, donnée à titre d'exemple non limitatif et faite en référence aux figures annexées :
- la figure 1 représente une vue schématique en coupe d'un article culinaire conforme à l'invention, et
- la figure 2 représente une vue schématique en coupe d'un article culinaire à titre informatif.

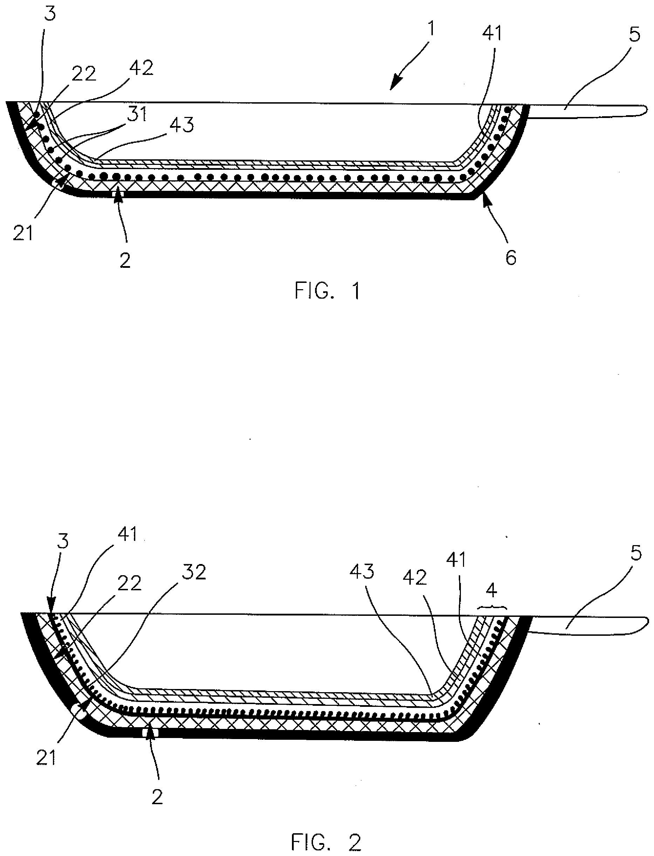

Les éléments identiques représentés sur les figures 1 et 2 sont identifiés par des références numériques identiques.

Sur les figures 1 et 2, on a représenté à titre d'exemple d'article culinaire selon l'invention (figure 1) et à titre illustratif (figure 2), une poêle 1 comprenant un support métallique 2 se présentant sous forme de calotte creuse et une poignée de préhension 5. Le support 2 comprend une face intérieure 21 qui est la face orientée du côté des aliments susceptibles d'être reçus dans la poêle 1, et une face extérieure 22 qui est destinée à être disposée vers une source de chaleur extérieure.

La face intérieure 21 est revêtue successivement, à partir du support 2, d'une base dure 3 en émail conforme à la présente invention, et d'un revêtement antiadhésif 4 qui comprend successivement à partir de la base dure 3 une couche de primaire 41 d'accrochage et deux couches de finition 42, 43.

Par ailleurs, les figures 1 et 2 montrent également que la face extérieure 22 du support 2 est avantageusement revêtue par un revêtement de couverture 6 extérieur (par exemple en émail), l'épaisseur de ce revêtement de couverture 6 étant classiquement comprise entre 20 pm et 300 pm.

La calotte 2 métallique servant de support est avantageusement en aluminium ou en alliage d'aluminium, en fonte d'aluminium (ou alliage d'aluminium de fonderie), en acier inoxydable, en fonte d'acier ou en cuivre.

A titre d'alliages d'aluminium susceptibles d'être utilisés pour réaliser le support de l'article culinaire 1, selon l'invention on conseille les alliages d'aluminium émaillables faiblement alliés, et en particulier
- les aluminiums « purs » à 99% d'aluminium de la série 1000, et par exemple les alliages 1050, 1100, 1200 et 1350,
- les alliages d'aluminium et de manganèse de la série 3000, et par exemple les alliages 3003, 3004, 3105 et 3005,
- les alliages d'aluminium et de silicium de la série 4000,
- les alliages d'aluminium et de magnésium de la série 5000, et par exemple les alliages 5005, 5050 et 5052, et
- les alliages d'aluminium, silicium et magnésium de la série 6000, et par exemple les alliages 6053, 6060, 6063, 6101 et 6951, et
- les alliages d'aluminium, fer, silicium de la série 8000, et par exemple l'alliage 8128.

A titre d'alliages d'aluminium de fonderie susceptibles d'être utilisés pour réaliser le support 2 (en l'occurrence une calotte) de l'article culinaire 1, on conseille les alliages aluminium-silicium AS, et de préférence les alliages aluminium-silicium de type AS7 à AS12, c'est-à-dire, les alliages AS contenant de 7 à 12% de silicium conformément à l'ancienne norme française NF AS 02-004.

La couche de primaire 41 et les couches de finition 42, 43 comprennent chacune au moins une résine fluorocarbonée frittée, seule ou en mélange avec une résine d'accrochage thermostable et résistant à au moins 200°C, qui forme(nt) un réseau continu fritté de résine fluorocarbonée, et le cas échéant, de résine d'accrochage.

La résine fluorocarbonée utilisée dans la couche de primaire 41 et, le cas échéant, dans la ou les couches de finition 42, 43, est avantageusement choisie parmi le polytétrafluoroéthylène (PTFE), le copolymère de tétrafluoroéthylène et de perfluoropropylvinyléther (PFA), le copolymère de tétrafluoroéthylène et d'hexafluoropropylène (FEP), et leurs mélanges (en particulier un mélange de PTFE et de PFA).

La ou les autre(s) résine(s) utilisé(es) dans la couche de primaire 41 et, le cas échéant, la ou les couches de finition 42, 43 est avantageusement choisie parmi les polyamides imides (PAI), les polyéthers imides (PEI), les polyimides (PI), les polyéthercétones (PEK), les polyétheréthercétones (PEEK), les polyéthersulfones (PES) et les sulfures de polyphénylène (PPS).

La couche de primaire 41 peut également avantageusement comprendre des charges et/ou des pigments.

A titre de charges utilisables dans la composition de primaire de l'article culinaire 1 selon l'invention, on peut notamment citer la silice colloïdale, les paillettes de mica recouverte de Ti0₂, l'alumine, le corindon, le quartz et leurs mélanges.

A titre de pigments utilisables dans la composition de primaire de l'article culinaire 1 selon l'invention, on peut notamment citer le noir de carbone, les oxydes de fer, et les oxydes mixtes de cobalt et de manganèse , le bioxyde de titane.

Dans le mode de réalisation illustré sur la figure 1, la base dure 3 est une couche d'émail discontinue comprenant une dispersion superficielle de gouttes d'émail 31 solidifiées, qui présentent une taille moyenne entre 2 pm et 50 pm et qui sont réparties de manière homogène à la surface de la face intérieure 21, avec un taux de revêtement de la face intérieure entre 40 et 80%, et une densité surfacique comprise entre 300 gouttes/ mm² et 2000 gouttes/mm².

Par dispersion superficielle de gouttes d'émail, on entend au sens de la présente invention, une couche d'émail discontinue se présentant à l'état divisé sur un support (en l'occurrence celui de l'article culinaire), de sorte que la rugosité de cette couche est créée par les gouttes d'émail dispersées.

Par taux de recouvrement du support, on entend au sens de la présente invention, le rapport, exprimé en pourcentage, la surface du support effectivement couverte par la dispersion superficielle de gouttes d'émail sur la surface totale du support pouvant être couverte par la base dure.

Dans le mode de réalisation représenté sur la figure 1, les gouttes d'émail 31 dispersées à la surface de la face intérieure 2 sont noyées dans la couche de primaire 41 du revêtement antiadhésif 4, de manière à permettre l'accrochage de la couche de primaire à la base dure 3 en émail. Une telle base dure 3 émaillée sous forme de dispersion superficielle de gouttes d'émail conduit à un renforcement mécanique accru du revêtement antiadhésif 4, notamment en termes de dureté et d'adhérence à la base dure 3 sous-jacente.

En effet, les particules de résine fluorocarbonée frittée et les charges de la couche de primaire 41 en pénétrant entre les gouttes d'émail 31 solidifiées déposées à la surface de la face intérieure 21, renforcent l'adhérence de la couche de primaire 41 sur la base dure 3. De ce fait, le renforcement mécanique du revêtement antiadhésif 4 est accru à la fois grâce aux charges dans la couche de primaire 41 et la dispersion de gouttes d'émail 31 de la base dure 3 qui jouent un rôle analogue à celui d'une charge renforçante dans la zone d'interpénétration des deux couches 3, 41.

De préférence, la base dure 3 de l'article culinaire selon l'invention représenté à la figure 1, présente une rugosité de surface Ra comprise entre 2 pm et 15 µm, et de préférence de 8 pm à 15 pm.

Une rugosité supérieure à 15 pm a pour conséquence que le revêtement antiadhésif 4 qui la recouvre n'est plus lisse.

A titre illustratif, sur la figure 2, la base dure 3 est une couche d'émail continue recouvrant intégralement la face intérieure 21 du support 2 (taux de recouvrement de 100%) et présentant une épaisseur comprise entre 50 pm et 100 pm. Etant donné que la base dure 3 est continue, la rugosité de surface est créée ici, non pas par la dispersion superficielle des gouttes d'émail solidifiées, comme c'est le cas selon l'invention, mais par les creux et les crêtes formés à la surface de la base dure 3, en raison de la présence de charges infusibles dans la composition de l'émail de la base dure 3.

Une telle couche 3 présente avantageusement une rugosité de surface Ra comprise entre 2 et 8 pm. Avec une rugosité de surface Ra comprise entre 2 et 8 µm, on a une bonne adhérence du revêtement antiadhésif 4 sur la base dure 3, conduisant à une résistance à l'abrasion élevées, sans perte au niveau des propriétés antiadhésives.

Par contre, avec une rugosité de surface Ra inférieure à 2 pm l'adhérence du revêtement antiadhésif à la base dure est trop faible.

Par ailleurs, pour une rugosité de surface Ra supérieure à 8 µm, la résistance à l'abrasion et les propriétés antiadhésives du revêtement antiadhésif seront également faibles.

En effet, étant donné que le revêtement antiadhésif présente généralement une épaisseur de l'ordre de 25 pm à 45 µm, il est probable que la présence des crêtes générées par les gouttes d'émail solidifiées ne soit pas nivelée par le revêtement antiadhésif 4.

On donne ci-après deux modes de réalisation d'un article culinaire 1 conforme à l'invention, qui comprennent chacun les étapes suivantes :
- a) fourniture d'un support 2, présentant la forme finale de l'article culinaire avec une face intérieure 21 destinée à être disposée du côté des aliments susceptibles d'être introduits dans ledit article 1, et une face extérieure 22 destinée à être disposée du côté d'une source de chaleur ;
- b) préparation de la surface de la face intérieure 21 ;
- c) réalisation d'une base dure 3 sur ladite face intérieure 21 dudit support 2 laquelle base dure (3) est une couche discontinue comprenant une dispersion superficielle de gouttes (31) d'émail réparties de manière homogène sur la face intérieure (21), avec un taux de recouvrement de la face intérieure (21) compris entre 40% et 80%, une densité surfacique comprise entre 300 gouttes/mm² et 2000 gouttes/mm², et une taille de gouttes comprise entre 2 pm et 50 pm; puis
- d) réalisation d'un revêtement antiadhésif 4 sur la couche dure 3 formée à l'étape c), comprenant le dépôt d'au moins une couche de composition à base de résine fluorocarbonée, puis une cuisson de cette couche à une température entre 370° et 430°C, et de préférence à une température de l'ordre de 415°C.

Pour ces deux modes de réalisation, l'étape c) de réalisation de la base dure (3) comprend les étapes successives suivantes :
- c1) préparation d'une barbotine aqueuse de fritte d'émail, ladite fritte d'émail présentant moins de 50 ppm de plomb et moins de 50 ppm de cadmium, et comportant 30 à 40% en poids de silice et 15 à 30% en poids d'oxyde de titane, moins de 10% en poids d'oxyde de vanadium et moins de 4% en poids de d'oxyde de lithium par rapport au poids total de la fritte, ladite barbotine aqueuse comportant au moins 20% en poids de charges minérales par rapport au poids total de barbotine ;
- c2) application par pulvérisation pneumatique de la barbotine sur la face 21 du support 2, puis séchage pour former une couche 3 discontinue ou continue d'émail non cuite ;
- c3) cuisson de ladite couche d'émail 3 à une température comprise entre 540 et 580°C pendant au moins 3 minutes, la cuisson de ladite couche d'émail 3 étant réalisée avant celle dudit revêtement antiadhésif 4.

De manière avantageuse, la fritte d'émail comprend :
Al₂O₃ : moins de 1% ;
B₂O₃ : moins de 1%
BaO : moins de 1% ;
K₂O : 5 à 20% ;
Li₂O : moins de ;
Na₂O : 10 à 25%
P₂O₅ : moins de ;
SiO₂ 30 à 40% ;
TiO₂ : 15 à 30%
V₂O₅ : moins de 10% ;
les teneurs indiquées étant des pourcentages en poids par rapport au poids de la fritte.

De manière avantageuse, la barbotine de fritte d'émail comporte en outre :
quartz : 5 à 30% ;
SiC : 10 à 30% ;
Pigment : 1 à 10%.
Agent de suspension : 2 à 10% ;
les teneurs indiquées étant des pourcentages massiques par rapport au poids total de la barbotine.

Pour la réalisation de l'article culinaire 1 selon l'invention (base dure 3 en émail discontinue), l'application de la barbotine sur la face intérieure 21 du support 2 est réalisée par pulvérisation pneumatique avec une pression de pulvérisation égale ou supérieure à 4 bars et la quantité d'émail déposée sur ladite face intérieure 21 est comprise entre 0,07 g/dm² et 0,2 g/dm².

Pour la réalisation de l'article culinaire à titre illustratif(base dure en émail continue), l'application de la barbotine sur la face intérieure (21) du support (2) est réalisée par pulvérisation pneumatique avec une pression de pulvérisation entre 2 et 5 bars et la quantité d'émail déposée sur ladite face intérieure 21 est comprise entre 1,5 g/dm² et 2,8 g/dm².

L'étape de préparation de surface peut être précédée d'une phase de dégraissage, suivie d'un traitement mécanique le sablage, le billage ou le grenaillage.

Il est également possible de préparer la surface de la face intérieure 21 du support par un traitement de surface chimique comprenant une phase de dégraissage, suivie d'un satinage, puis enfin d'un rinçage.

### EXEMPLES

### Exemple 1

Préparation d'une fritte d'émail F1 conforme à la fritte d'émail utilisée dans le procédé de l'invention.

On a réalisé une fritte d'émail F1 conforme à la fritte d'émail utilisée dans le procédé de l'invention, par fusion à 1200°C des constituants suivants :
Al₂O₃ : 0,1%
B₂O₃ : 0,6%
BaO : 0,3%
K₂O : 12%
Li₂O : 2,3%
Na₂O : 19%
P₂O₅ : 1,6%
SiO₂ : 35%
TiO₂ : 23,5%
V₂O₅ : 5,2%

Le mélange fondu obtenu est ensuite broyé pour donner une fritte pulvérulente F1 ayant une granulométrie moyenne de 15 pm et un coefficient de dilation linéaire de 494.10⁻¹ m.K⁻¹.

### Exemple 2

Préparation d'un premier exemple de barbotine B1 de fritte d'émail conforme à la barbotine utilisée dans le procédé de l'invention.

La fritte d'émail F1 est formulée sous la forme d'une barbotine B1, en mélangeant les constituants suivants (parties en poids) :
Fritte d'émail F1 : 70 ,
Eau : 55 ;
Quartz : 25 ;
SiC : 23 ;
Pigment noir à base d'oxydes de Fe et de Mn : 5.
Acide borique : 4.

La barbotine B1 ainsi obtenue présente une densité de 1,70 g/cm³, et un étalement (« set-up ») de 1300 g/m².

Par étalement, on entend ici la quantité de matière nécessaire pour couvrir uniformément après application une surface donnée.

### Exemple 3

Réalisation d'un revêtement antiadhésif R1 conforme à celui de la présente invention.

Pour la réalisation d'un revêtement antiadhésif R1 conforme à l'invention, on donne ci-après à titre d'exemple les compositions des différentes couches de ce revêtement R1. Ces couches sont obtenues par simple mélange des différents ingrédients de ces compositions, qui sont présentées dans les tableaux 1 à 3.

**Tableau 1**

| Composition de la couche Primaire | Parties en poids |
|---|---|
| Dispersion aqueuse de polyamide-imide à 10% d'extrait sec environ | 37,1 |
| N. Méthylpyrrolidone | 6,5 |
| Agents d'étalement et filmogènes (14% dans l'eau) | 4 |
| Dispersion PTFE 60% d'extrait sec | 21,2 |
| Silice colloïdale 30% d'extrait sec | 13,9 |
| Noir de carbone à 25% d'extrait sec | 2,8 |
| Eau | 14 |
| NaOH (d=0.9) | 0,5 |

Une telle composition présente une viscosité de 45 ± 2 secondes mesuré à la coupe AFNOR 2.5 et un extrait sec de 21%.

**Tableau 2**

| Composition de la couche de finition intermédiaire | Parties en poids |
|---|---|
| | |
| Dispersion PTFE à 60% d'extrait sec | 78,9 |
| Dispersion PFA 6900 à 50% d'extrait sec | 0,5 |
| Agent d'étalement et filmogène | 19,25 |
| Paillettes mica recouvertes TiO₂ | 0,2 |
| Noir de carbone à 25% d'extrait sec | 0,02 |
| Propylène glycol | 1,13 |

Une telle composition présente une viscosité de 45 ± 2 secondes mesuré à la coupe AFNOR 2.5 et un extrait sec de 47,5%.

**Tableau 3**

| Composition de la couche de finition supérieure | Parties en poids |
|---|---|
| Dispersion PTFE à 60% d'extrait sec | 78,9 |
| Agent d'étalement et filmogène | 19,3 |
| Paillettes mica recouvertes TiO₂ | 0,2 |
| Propylène glycol | 1,65 |

Une telle composition présente une viscosité de 45 ± 2 secondes mesuré à la coupe AFNOR 2.5 et un extrait sec de 47,5 %.

### Exemple 4 (exemple comparatif)

Réalisation d'un premier exemple d'article culinaire avec une base dure continue.

On utilise à titre de support une calotte en aluminium obtenue par formage d'un disque en aluminium (de type 1200), la calotte ainsi formée ayant un fond dont le diamètre est d'environ 28 cm.

Cette calotte est dégraissée par aspersion d'une solution alcaline, puis satinée par immersion dans un bain de soude, et enfin neutralisée à l'acide nitrique, rincée puis séchée.

Puis, on applique au moyen d'un pistolet pneumatique la barbotine B1 de l'exemple 2, de manière à former une couche continue. La calotte ainsi revêtue est séchée à une température de 140°C, puis vitrifiée à 555°C pendant 5 minutes, de manière à obtenir une base dure continue d'épaisseur 50 pm. La rugosité Ra de cette base dure continue est de 8 pm.

Après refroidissement de cette base dure, on réalise le revêtement antiadhésif R1 en appliquant successivement sur la base dure émaillée la couche de primaire, la couche de finition intermédiaire et la couche de finition supérieure (couche de surface) de l'exemple 3, chaque couche étant respectivement séchée à 140°C et le tout étant étuvé à 415°C pendant 7 minutes pour obtenir le revêtement antiadhésif R1 de l'exemple 3.

On obtient ainsi un premier exemple de poêle 1 (état neuf).

On évalue l'adhérence du revêtement antiadhésif R1 sur la base dure en réalisant un test d'adhérence par quadrillage selon la norme ISO 2409, suivi d'une immersion de l'article pendant 9 heures dans de l'eau bouillante. Le revêtement antiadhésif ne présente pas de décollement. Cette adhérence sur le support est excellente.

On évalue ensuite les caractéristiques d'antiadhésivité du revêtement antiadhésif R1 au moyen du test au lait carbonisé selon la norme NF D 21-511. Sur la poêle 1 à l'état neuf, on observe une excellente antiadhésivité (100 points selon la norme NF D 21-511).

On évalue la résistance à l'abrasion du revêtement antiadhésif R1 en soumettant celui-ci à l'action d'un tampon abrasif de type SCOTCH BRITE (marque déposée) vert. Simultanément, on évalue l'anti-adhésivité du revêtement antiadhésif R1 au moyen du test au lait carbonisé. On obtient les performances suivantes :

### pour la résistance à l'abrasion :

la première rayure (correspondant à l'apparition du métal constitutif du support) est observée visuellement (au grossissement optique X 8) après 20000 passages du tampon.

### pour l'antiadhésivité :

on obtient une excellente antiadhésivité du revêtement R1 (100 points selon la norme NF D 21-511) après 3000 passages du tampon abrasif, et une adhérence acceptable (au moins 25 points selon la norme NF D 21511) après 20000 passages du tampon abrasif.

Enfin, la résistance à la corrosion est évaluée par immersion de l'article culinaire dans un bain d'eau salée à 10 g/1, maintenu à 80°C pendant 24 heures. La surface du revêtement antiadhésif ne présente pas de cloques ou d'altérations.

### Exemple 5

Préparation d'un deuxième exemple B2 de barbotine de fritte d'émail conforme à la barbotine utilisée dans le procédé de l'invention.

La fritte d'émail F1 est formulée sous forme d'une barbotine B2 en mélangeant les constituants suivants (parties en poids) :
Fritte d'émail ci-dessus : 85 ;
Eau : 55 ;
Quartz : 15 ;
SiC : 23 ;
Pigment noir FA1220 : 5 ;
Acide borique : 4.

La barbotine présente une densité de 1,70 g/cm³, et un étalement (« set-up ») de 1300 g/m².

### Exemple 6

Réalisation d'un premier exemple d'article culinaire selon l'invention avec une base dure discontinue.

On utilise le même support qu'à l'exemple 4, à savoir une calotte creuse en aluminium de type 1200, qui est dégraissée par aspersion d'une solution alcaline, satinée par immersion dans un bain de soude, puis neutralisée à l'acide nitrique, rincée puis séchée.

Puis, de même qu'à l'exemple 4, on applique au moyen d'un pistolet pneumatique la barbotine B2 pour obtenir un dépôt d'une couche d'émail discontinue se présentant sous forme de gouttelettes disjointes. La calotte ainsi revêtue d'une base dure discontinue est séchée à 140°C, puis vitrifiée à 555°C pendant 5 minutes de manière à obtenir une couche discontinue d'un poids de 0,9 g.

Par observation microscopique on détermine la taille des gouttes et leur densité surfacique. La taille des gouttes est comprise entre 2 et 50 pm et la densité surfacique est de l'ordre de 1500 gouttes/mm². On mesure la rugosité Ra de la couche, et on obtient Ra = 15 µm.

Après refroidissement de la base dure émaillée, on applique successivement sur la base dure la couche de primaire, la couche de finition intermédiaire et la couche de finition supérieure (couche de surface) de l'exemple 3, chaque couche étant respectivement séchée à 140°C et le tout étant étuvé à 415°C pendant 7 minutes pour obtenir le revêtement antiadhésif R1 de l'exemple 3. On obtient un premier exemple de poêle selon l'invention (état neuf).

L'adhérence du revêtement antiadhésif sur la base dure est évaluée par le test d'adhérence par quadrillage selon la norme ISO 2409 suivi d'une immersion de la poêle 1 pendant 9 heures à l'eau bouillante. Le revêtement antiadhésif ne présente pas de décollement. L'adhérence sur le support est excellente.

On évalue ensuite les caractéristiques d'antiadhésivité du revêtement antiadhésif R1 au moyen du test au lait carbonisé selon la norme NF D 21-511. Sur la poêle 1 à l'état neuf, on observe une excellente antiadhésivité (100 points selon la norme NF D 21-511).

On évalue la résistance à l'abrasion du revêtement antiadhésif R1 en soumettant celui-ci à l'action d'un tampon abrasif de type SCOTCH BRITE (marque déposée) vert. Simultanément, on évalue l'anti-adhésivité du revêtement antiadhésif R1 au moyen du test au lait carbonisé. On obtient les performances suivantes :

### pour la résistance à l'abrasion :

la première rayure (correspondant à l'apparition du métal constitutif du support) est observée visuellement (au grossissement optique X 8) après 15000 passages du tampon.

### pour l'antiadhésivité :

on obtient une excellente antiadhésivité du revêtement R1 (100 points selon la norme NF D 21-511) après 3000 passages du tampon abrasif, et une adhérence acceptable (au moins 25 points selon la norme NF D 21511) après 15000 passages du tampon abrasif.

### Exemple 7

Préparation d'un troisième exemple B3 de barbotine de fritte d'émail conforme à la barbotine utilisée dans le procédé de l'invention.

La fritte d'émail F1 est formulée sous forme d'une barbotine B3 en mélangeant les constituants suivants (parties en poids) :
Fritte d'émail ci-dessus : 85 ;
Eau : 55 ;
Quartz : 8 ;
SiC : 23 ;
Pigment noir FA1220 : 5 ;
Acide borique :4.

La barbotine présente une densité de 1,70 g/cm³, et un étalement (« set-up ») de 1300 g/m².

### Exemple 8

Réalisation d'un deuxième exemple d'article culinaire selon l'invention avec une base dure discontinue.

On utilise le même support qu'à l'exemple 4, à savoir une calotte creuse en aluminium de type 1200, qui est dégraissée par aspersion d'une solution alcaline, satinée par immersion dans un bain de soude, puis neutralisée à l'acide nitrique, rincée puis séchée.

Puis, de même qu'à l'exemple 4, on applique au moyen d'un pistolet pneumatique la barbotine B3 pour obtenir un dépôt d'une couche d'émail discontinue se présentant sous forme de gouttelettes disjointes. La calotte ainsi revêtue d'une base dure discontinue est séchée à 140°C, puis vitrifiée à 555°C pendant 5 minutes de manière à obtenir une couche discontinue d'un poids de 0,9 g.

Par observation microscopique on détermine la taille des gouttes et leur densité surfacique. La taille des gouttes est comprise entre 2 et 30 pm et la densité surfacique est de l'ordre de 1500 gouttes/mm². On mesure la rugosité Ra de la couche, et on obtient Ra = 6,5 pm.

Après refroidissement de la base dure émaillée, on applique successivement sur la base dure la couche de primaire, la couche de finition intermédiaire et la couche de finition supérieure (couche de surface) de l'exemple 3, chaque couche étant respectivement séchée à 140°C et le tout étant étuvé à 415°C pendant 7 minutes pour obtenir le revêtement antiadhésif R1 de l'exemple 3. On obtient un deuxième exemple de poêle selon l'invention (état neuf).

L'adhérence du revêtement antiadhésif sur la base dure est évaluée par le test d'adhérence par quadrillage selon la norme ISO 2409 suivi d'une immersion de la poêle 1 pendant 9 heures à l'eau bouillante. Le revêtement antiadhésif ne présente pas de décollement. L'adhérence sur le support est excellente.

On évalue ensuite les caractéristiques d'antiadhésivité du revêtement antiadhésif R1 au moyen du test au lait carbonisé selon la norme NF D 21-511. Sur la poêle 1 à l'état neuf, on observe une excellente antiadhésivité (100 points selon la norme NF D 21-511).

On évalue la résistance à l'abrasion du revêtement antiadhésif R1 en soumettant celui-ci à l'action d'un tampon abrasif de type SCOTCH BRITE (marque déposée) vert. Simultanément, on évalue l'anti-adhésivité du revêtement antiadhésif R1 au moyen du test au lait carbonisé. On obtient les performances suivantes :

### pour la résistance à l'abrasion :

la première rayure (correspondant à l'apparition du métal constitutif du support) est observée visuellement (au grossissement optique X 8) après 16000 passages du tampon.

### pour l'antiadhésivité :

on obtient une excellente antiadhésivité du revêtement R1 (100 points selon la norme NF D 21-511) après 3000 passages du tampon abrasif, et une adhérence acceptable (au moins 25 points selon la norme NF D 21-511) après 16000 passages du tampon abrasif.

### Exemple 9 : exemple comparatif

Réalisation d'un exemple d'article culinaire selon l'art antérieur (sans base dure).

On utilise le même support qu'à l'exemple 4, à savoir une calotte creuse en aluminium de type 1200, qui est dégraissée par aspersion d'une solution alcaline, satinée par immersion dans un bain de soude, puis neutralisée à l'acide nitrique, rincée puis séchée.

Sur cette calotte, on applique successivement la couche de primaire, la couche de finition intermédiaire et la couche de finition supérieure (couche de surface) de l'exemple 3, chaque couche étant respectivement séchée à 140°C et le tout étant étuvé à 415°C pendant 7 minutes pour obtenir le revêtement antiadhésif R1 de l'exemple 3 pour former le revêtement antiadhésif R1.

On obtient ainsi un exemple de poêle selon l'art antérieur (état neuf).

On évalue l'adhérence du revêtement antiadhésif 1 sur la base dure en réalisant un test d'adhérence par quadrillage selon la norme ISO 2409, suivi d'une immersion de l'article pendant 9 heures dans de l'eau bouillante. Le revêtement antiadhésif présente des décollements sur plus de 20 carreaux. Cette adhérence sur le support est insuffisante.

On évalue ensuite les caractéristiques d'antiadhésivité du revêtement antiadhésif R1 au moyen du test au lait carbonisé selon la norme NF D 21-511. Sur la poêle 1 à l'état neuf, on observe une excellente antiadhésivité (100 points selon la norme NF D 21-511).

Puis, on évalue la résistance à l'abrasion du revêtement antiadhésif R1 en soumettant celui-ci à l'action d'un tampon abrasif de type SCOTCH BRITE (marque déposée) vert. Simultanément, on évalue l'anti-adhésivité du revêtement antiadhésif R1 au moyen du test au lait carbonisé. On obtient les performances suivantes :

### pour la résistance à l'abrasion :

la première rayure (correspondant à l'apparition du métal constitutif du support) est observée visuellement (au grossissement optique X 8) après seulement 3000 passages du tampon.

### pour l'antiadhésivité :

on obtient une antiadhésivité nulle du revêtement R1 (0 points selon la norme NF D 21-511) après seulement 3000 passages du tampon abrasif.

Enfin, la résistance à la corrosion est évaluée par immersion de l'article culinaire dans un bain d'eau salée à 10 g/l, maintenu à 80°C pendant 24 heures. La surface du revêtement antiadhésif présente de très nombreuses cloques.

## Revendications

1. Article culinaire (1) comprenant un support (2) métallique présentant une face intérieure (21) concave destinée à être disposée du côté des aliments susceptibles d'être introduits dans ledit article (1) et une face extérieure (22) convexe destinée à être disposée vers une source de chaleur, ladite face intérieure étant revêtue successivement à partir dudit support (2), d'une base dure (3) et d'un revêtement antiadhésif (4) recouvrant ladite base dure (3), ledit revêtement antiadhésif (4) comportant au moins une couche (41) comprenant au moins une résine fluorocarbonée seule ou en mélange avec une résine d'accrochage thermostable et résistant à au moins 200°C, cette (ces) résine(s) formant un réseau continu fritté,
**caractérisé en ce que** la base dure (3) est une couche d'émail rugueuse contenant moins de 50 ppm de plomb et moins de 50 ppm de cadmium et est une couche discontinue comprenant une dispersion superficielle de gouttes (31) d'émail réparties de manière homogène sur la face intérieure de l'article, avec un taux de recouvrement de la face intérieure (21) compris entre 40% et 80%, une densité surfacique comprise entre 300 gouttes/mm² et 2000 gouttes/mm², et une taille de gouttes comprise entre 2 µm et 50 µm, présentant les caractéristiques suivantes :
- une dureté supérieure à celle du métal ou de l'alliage métallique constitutif du support (2),
- un point de fusion compris entre celui du métal ou de l'alliage métallique constitutif du support (2) et celui de la (ou des) résine (s) frittée(s) du revêtement antiadhésif (4), et
- une rugosité de surface Ra comprise entre 2 et 50 µm.

2. Article culinaire (1) selon la revendication 1, **caractérisé en ce que** la couche d'émail (3) est en contact à la fois avec le support et le revêtement antiadhésif, et est donc obtenue à partir d'une barbotine aqueuse de fritte d'émail comportant outre la fritte :
- 5 à 30% en poids de quartz,
- 1 à 10% en poids de pigment, et
- 2 à 10% en poids d'agent de suspension.
les teneurs indiquées étant des pourcentages en poids par rapport au poids de la fritte.

3. Article culinaire (1) selon la revendication 1 ou 2, **caractérisé en ce que** la couche d'émail (3) est obtenue à partir d'une barbotine aqueuse de fritte d'émail, dans laquelle la fritte d'émail comporte 30 à 40% en poids de silice et 15 à 30% en poids d'oxyde de titane, moins de 10% en poids d'oxyde de vanadium et moins de 4% en poids de d'oxyde de lithium par rapport au poids total de la fritte.

4. Article culinaire (1) selon l'une quelconque des revendications 1 à 3, **caractérisé en ce que** le point de fusion de la base dure (3) est compris entre une température supérieure de 50°C à la température de fusion la plus élevée des résines frittées du revêtement antiadhésif (4), et une température inférieure de 10°C à la température de fusion du métal ou de l'alliage métallique constitutif du support (2).

5. Article culinaire (1) selon l'une quelconque des revendications 1 à 4, **caractérisé en ce que** la base dure (3) présente une rugosité de surface Ra comprise entre 2 µm et 15 µm, de préférence entre 8 µm et 15 µm.

6. Article culinaire (1) selon l'une quelconque des revendications précédentes, **caractérisé en ce que** la résine fluorocarbonée est choisie parmi le polytétrafluoroéthylène (PTFE), le copolymère de tétrafluoroéthylène et de perfluoropropylvinyléther (PFA), et le copolymère de tétrafluoroéthylène et d'hexafluoropropylène (FEP), et leurs mélanges.

7. Article culinaire (1) selon l'une quelconque des revendications précédentes, **caractérisé en ce que** la résine d'accrochage est choisie parmi les polyamides imides (PAI), les polyéthers imides (PEI), les polyamides (PI), les polyéthercétones (PEK), les polyétheréthercétones (PEEK), les polyéthersulfones (PES), et les sulfures de polyphénylène (PPS).

8. Article culinaire (1) selon l'une quelconque des revendications précédentes, **caractérisé en ce que** le revêtement antiadhésif (4) comprend une couche de primaire (41) d'accrochage et au moins une couche de finition (42), lesdites couches de primaire (41) et de finition (42, 43) comportant, outre le réseau continu fritté de résine fluorocarbonée et, le cas échéant, de résine d'accrochage, des charges minérales ou organiques et/ou des pigments.

9. Procédé de fabrication d'un article culinaire (1) comprenant les étapes suivantes :
- a) fourniture d'un support (2) présentant la forme finale de l'article culinaire avec une face intérieure (21) concave destinée à être disposée du côté des aliments susceptibles d'être introduits dans ledit article (1), et une face extérieure (22) convexe destinée à être disposée du côté d'une source de chaleur ;
- b) traitement de surface de ladite face intérieure (21) pour obtenir une face intérieure (21) traitée adaptée à l'adhérence d'une base dure sur le support ;
- c) réalisation d'une base dure (3) adhérente sur ladite face intérieure (21) dudit support (2) laquelle base dure (3) est une couche discontinue comprenant une dispersion superficielle de gouttes (31) d'émail réparties de manière homogène sur la face intérieure (21), avec un taux de recouvrement de la face intérieure (21) compris entre 40% et 80%, une densité surfacique comprise entre 300 gouttes/mm² et 2000 gouttes/mm², et une taille de gouttes comprise entre 2 µm et 50 µm; puis
- d) réalisation d'un revêtement antiadhésif (4) sur ladite couche dure (3) formée à l'étape c), comprenant le dépôt d'au moins une couche de composition à base de résine fluorocarbonée, puis une cuisson à une température entre 370°C et 430°C ;
ledit procédé étant **caractérisé en ce que** l'étape c) de réalisation d'une base dure (3) comprend les étapes successives suivantes :
- c1) préparation d'une barbotine aqueuse de fritte d'émail, ladite fritte d'émail étant exempte de plomb et de cadmium présentant moins de 50 ppm de plomb et moins de 50 ppm de cadmium, et comportant 30 à 40% en poids de silice et 15 à 30% en poids d'oxyde de titane, moins de 10% en poids d'oxyde de vanadium et moins de 4% en poids de d'oxyde de lithium par rapport au poids total de la fritte, ladite barbotine aqueuse comportant au moins 20% en poids de charges minérales par rapport au poids total de barbotine ;
- c2) application par pulvérisation de la barbotine sur la face (21) du support (2), puis séchage pour former une couche (3) d'émail non cuite de composition homogène sur toute l'épaisseur de la couche ;
- c3) cuisson de ladite couche d'émail (3) à une température comprise entre 540°C et 580°C pendant au moins 3 minutes, la cuisson de ladite couche d'émail (3) étant réalisée avant celle dudit revêtement antiadhésif (4).

10. Procédé selon la revendication 9, **caractérisé en ce que** la barbotine de fritte d'émail comporte en outre :
quartz : 5 à 30% ;
SiC : 10 à 30% ;
Pigment : 1 à 10%.
Agent de suspension : 2 à 10% ;
les teneurs indiquées étant des pourcentages en poids par rapport au poids de la fritte.

11. Procédé selon la revendication 9 ou 10, **caractérisé en ce que** l'application de la barbotine sur la face intérieure (21) du support (2) est réalisée par pulvérisation pneumatique avec une pression de pulvérisation égale ou supérieure à 4 bars et **en ce que** la quantité d'émail déposée sur ladite face intérieure est comprise entre 0,07 g/dm² et 0,2 g/dm².

12. Procédé selon l'une quelconque des revendications 9 à 11, **caractérisé en ce que** la fritte d'émail comprend :
Al₂O₃ : moins de 1% ;
B₂O₃ : moins de 1% ;
BaO : moins de 1% ;
K₂O : 5 à 20% ;
Li₂O : moins de 4% ;
Na₂O : 10 à 25% ;
P₂O₅ : moins de 4% ;
SiO₂ : 30 à 40% ;
TiO₂ : 15 à 30% ;
V₂O₅ : moins de 10% ;
les teneurs indiquées étant des pourcentages en poids par rapport au poids de la fritte.

## Patentansprüche

1. Kochartikel (1), umfassend einen metallischen Träger (2), der eine konkave Innenfläche (21) aufweist, die bestimmt ist, auf der Seite der Lebensmittel angeordnet zu sein, die in den Artikel (1) eingebracht werden könnten, und eine konvexe Außenfläche (22), die bestimmt ist, in Richtung einer Wärmequelle angeordnet zu sein, wobei die Innenfläche aufeinanderfolgend ab dem Träger (2) mit einer harten Basis (3) und einer Antihaftbeschichtung (4), welche die harte Basis (3) bedeckt, beschichtet ist, wobei die Antihaftbeschichtung (4) mindestens eine Schicht (41) aufweist, umfassend mindestens ein Fluorkohlenstoffharz allein oder gemischt mit einem thermisch stabilen und gegenüber mindestens 200 °C widerstandsfähigen Haftharz, wobei diese(s) Harz(e) ein kontinuierliches gefrittetes Netz bilden,
**dadurch gekennzeichnet, dass** die harte Basis (3) eine raue Emailschicht ist, die unter 50 ppm Blei und unter 50 ppm Kadmium enthält und eine diskontinuierliche Schicht ist, die eine oberflächliche Dispersion von Emailtropfen (31) umfasst, die gleichmäßig auf der Innenfläche des Artikels mit einem Bedeckungsgrad der Innenfläche (21) zwischen 40 % und 80 % inklusive, einer Oberflächendichte zwischen 300 Tropfen/mm² und 2000 Tropfen/mm² inklusive und einer Tropfengröße zwischen 2 µm und 50 µm inklusive verteilt sind, aufweisend die folgenden Merkmale:
- eine Härte, die höher als die des Metalls oder der Metalllegierung ist, die den Träger (2) bilden,
- einen Schmelzpunkt zwischen inklusive dem des Metalls oder der Metalllegierung, die den Träger (2) bilden, und dem des/der gefritteten Harze(s) der Antihaftbeschichtung (4), und
- eine Oberflächenrauigkeit Ra zwischen 2 und 50 µm inklusive.

2. Kochartikel (1) nach Anspruch 1, **dadurch gekennzeichnet, dass** die Emailschicht (3) sowohl mit dem Träger und der Antihaftbeschichtung im Kontakt ist und demzufolge aus einem wässrigen Emailfritten-Schlicker erhalten ist, aufweisend neben der Fritte:
- 5 bis 30 Gew.-% Quarz,
- 1 bis 10 Gew.-% Pigment, und
- 2 bis 10 Gew.-% Suspensionsmittel,
wobei die genannten Anteile Gewichtsprozentsätze in Bezug auf das Gewicht der Fritte sind.

3. Kochartikel (1) nach Anspruch 1 oder 2, **dadurch gekennzeichnet, dass** die Emailschicht (3) aus einem wässrigen Emailfritte-Schlicker erhalten ist, wobei die Emailfritte 30 bis 40 Gew.-% Siliziumdioxid und 15 bis 30 Gew.-% Titanoxid, unter 10 Gew.-% Vanadiumoxid und unter 4 Gew.-% Lithiumoxid in Bezug auf das Gesamtgewicht der Fritte aufweist.

4. Kochartikel (1) nach einem der Ansprüche 1 bis 3, **dadurch gekennzeichnet, dass** der Schmelzpunkt der harten Basis (3) zwischen einer Temperatur 50 °C über der höchsten Schmelztemperatur der gefritteten Harze der Antihaftbeschichtung (4) und einer Temperatur 10 °C unter der Schmelztemperatur des Metalls oder der Metalllegierung, welche den Träger (2) bilden, inklusive liegt.

5. Kochartikel (1) nach einem der Ansprüche 1 bis 4, **dadurch gekennzeichnet, dass** die harte Basis (3) eine Oberflächenrauigkeit Ra zwischen 2 µm und 15 µm, vorzugsweise zwischen 8 µm und 15 µm, inklusive aufweist.

6. Kochartikel (1) nach einem der vorangehenden Ansprüche, **dadurch gekennzeichnet, dass** das Fluorkohlenstoffharz aus dem Polytetrafluorethylen (PTFE), dem Copolymer von Tetrafluorethylen und von Perfluorpropylvinylether (PFA) und dem Copolymer von Tetrafluorethylen und von Hexafluorpropylen (FEP) und deren Gemischen ausgewählt ist.

7. Kochartikel (1) nach einem der vorangehenden Ansprüche, **dadurch gekennzeichnet, dass** das Haftharz aus den Polyamidimiden (PAI), den Polyetherimiden (PEI), den Polyamiden (PI), den Polyethercetonen (PEK), den Polyetherethercetonen (PEEK), den Polyethersulfonen (PES) und den Polyphenylensulfiden (PPS) ausgewählt ist.

8. Kochartikel (1) nach einem der vorangehenden Ansprüche, **dadurch gekennzeichnet, dass** die Antihaftbeschichtung (4) eine primäre Haftschicht (41) und mindestens eine abschließende Schicht (42) umfasst, wobei die primäre Schicht (41) und die abschließende Schicht (42, 43) neben dem kontinuierlichen gefritteten Fluorkohlenstoffharz- und gegebenenfalls Haftharznetz mineralische oder organische Zuschläge und/oder Pigmente aufweist.

9. Verfahren zur Herstellung eines Kochartikels (1), umfassend die folgenden Schritte:
- a) Bereitstellen eines Trägers (2), welcher die finale Form des Kochartikels mit einer konkaven Innenfläche (21), die bestimmt ist, auf der Seite der Lebensmittel angeordnet zu sein, die in den Artikel (1) eingebracht werden könnten, und einer konvexen Außenfläche (22), die bestimmt ist, zu einer Wärmequelle angeordnet zu sein, aufweist;
- b) Oberflächenbehandeln der Innenfläche (21), um eine behandelte Innenfläche (21) zu erhalten, die für das Haften einer harten Basis auf dem Träger geeignet ist;
- c) Herstellen einer harten Basis (3), die auf der Innenfläche (21) des Trägers (2) haftet, wobei die harte Basis (3) eine diskontinuierliche Schicht ist, die eine oberflächliche Dispersion von Emailtropfen (31) umfasst, die gleichmäßig auf der Innenfläche (21) mit einem Bedeckungsgrad der Innenfläche (21) zwischen 40 % und 80 % inklusive, einer Oberflächendichte zwischen 300 Tropfen/mm² und 2000 Tropfen/mm² inklusive und einer Tropfengröße zwischen 2 µm und 50 µm inklusive verteilt sind, dann
- d) Herstellen einer Antihaftbeschichtung (4) auf der harten Schicht (3), die in Schritt c) gebildet wurde, umfassend das Aufbringen mindestens einer zusammengesetzten Schicht auf der Basis von Fluorkohlenstoffharz, dann ein Brennen bei einer Temperatur zwischen 370 °C und 430 °C;
wobei das Verfahren **dadurch gekennzeichnet ist, dass** der Schritt c) des Herstellens einer harten Basis (3) die folgenden aufeinanderfolgenden Schritte umfasst:
- c1) Herstellen eines wässrigen Emailfritte-Schlickers, wobei die Emailfritte frei von Blei und von Kadmium ist, aufweisend unter 50 ppm Blei und unter 50 ppm Kadmium, und aufweisend 30 bis 40 Gew.-% Siliziumdioxid und 15 bis 30 Gew.-% Titanoxid, unter 10 Gew.-% Vanadiumoxid und unter 4 Gew.-% Lithiumoxid in Bezug auf das Gesamtgewicht der Fritte, wobei der wässrige Schlicker mindestens 20 Gew.-% mineralische Zuschläge in Bezug auf das Gesamtgewicht des Schlickers aufweist;
- c2) Auftragen des Schlickers durch Zerstäuben auf die Fläche (21) des Trägers (2), dann Trocknen, um eine nicht gehärtete Emailschicht (3) mit homogener Zusammensetzung über die gesamte Stärke der Schicht zu bilden;
- c3) Härten der Emailschicht (3) bei einer Temperatur zwischen 540 °C und 580 °C inklusive während mindestens 3 Minuten, wobei das Härten der Emailschicht (3) vor dem der Antihaftbeschichtung (4) durchgeführt wird.

10. Verfahren nach Anspruch 9, **dadurch gekennzeichnet, dass** der Emailfritte-Schlicker ferner aufweist:
Quarz: 5 bis 30 %;
SiC: 10 bis 30 %;
Pigment: 1 bis 10 %,
Suspensionsmittel: 2 bis 10 %;
wobei die genannten Anteile Gewichtsprozentsätze in Bezug auf das Gewicht der Fritte sind.

11. Verfahren nach Anspruch 9 oder 10, **dadurch gekennzeichnet, dass** das Auftragen des Schlickers auf die Innenfläche (21) des Trägers (2) durch pneumatisches Zerstäuben mit einem Zerstäubungsdruck von gleich oder über 4 bar durchgeführt wird und dass die auf die Innenfläche aufgebrachte Emailmenge zwischen 0,07 g/dm² und 0,2 g/dm² inklusive beträgt.

12. Verfahren nach einem der Ansprüche 9 bis 11, **dadurch gekennzeichnet, dass** die Emailfritte umfasst:
Al₂O₃: unter 1 %;
B₂O₃: unter 1 %;
BaO: unter 1 %;
K₂O: 5 bis 20 %;
Li₂O: unter 4 %;
Na₂O: 10 bis 25 %;
P₂O₅: unter 4 %;
SiO₂: 30 bis 40 %;
TiO₂: 15 bis 30 %;
V₂O₅: unter 10 %;
wobei die genannten Anteile Gewichtsprozentsätze in Bezug auf das Gewicht der Fritte sind.

## Claims

1. A cooking utensil (1) comprising a metal substrate (2) having a concave inner face (21) intended to be arranged on the side of food to be placed in said utensil (1) and a convex outer face (22) intended to be arranged towards a heat source, said inner face, starting from said substrate (2), successively being coated with a hard base (3) and a non-stick coating (4) covering said hard base (3), said non-stick coating (4) comprising at least one layer (41) comprising at least one fluorocarbon resin alone or in a mixture with a heat-stable binder resin resistant to at least 200°C, this or these resin(s) forming a continuous sintered network,
**characterized in that** the hard base (3) is a rough layer of enamel containing less than 50 ppm lead and less than 50 ppm cadmium and is a discontinuous layer comprising a surface dispersion of enamel droplets (31) distributed homogeneously over the inner face of the utensil, with a coating rate of the inner face (21) of between 40% and 80%, a surface density of between 300 droplets/mm² and 2000 droplets/mm², and a droplet size of between 2 µm and 50 µm, having the following characteristics:
- a hardness greater than that of the metal or metal alloy forming the substrate (2),
- a melting point lying between that of the metal or metal alloy forming the substrate (2) and that of the sintered resin(s) of the non-stick coating (4), and
- a surface roughness Ra of between 2 and 50 µm.

2. The cooking utensil (1) according to claim 1, **characterized in that** the enamel layer (3) is in contact both with the substrate and with the non-stick coating, and is therefore obtained from an aqueous slip of enamel frit which, in addition to the frit, comprises:
- 5 to 30% by weight of quartz,
- 1 to 10% by weight of pigment, and
- 2 to 10% by weight of suspension agent,
the indicated contents being weight percentages relative to the weight of the frit.

3. The cooking utensil (1) according to claim 1 or 2, **characterized in that** the enamel layer (3) is obtained from an aqueous slip of enamel frit, in which the enamel frit contains 30 to 40% by weight of silica and 15 to 30% by weight of titanium oxide, less than 10% by weight of vanadium oxide and less than 4% by weight of lithium oxide relative to the total weight of the frit.

4. The cooking utensil (1) according to any one of claims 1 to 3, **characterized in that** the melting point of the hard base (3) lies between a temperature 50°C higher than the highest melting point of the sintered resins of the non-stick coating (4), and a temperature 10°C lower than the melting point of the constituent metal or metal alloy of the substrate (2).

5. The cooking utensil (1) according to any one of claims 1 to 4, **characterized in that** the hard base (3) has a surface roughness Ra of between 2 µm and 15 µm, preferably between 8 µm and 15 µm.

6. The cooking utensil (1) according to any one of the preceding claims, **characterized in that** the fluorocarbon resin is selected from polytetrafluoroethylene (PTFE), the copolymer of tetrafluoroethylene and perfluoropropylvinylether (PFA), and the copolymer of tetrafluoroethylene and hexafluoropropylene (FEP), and mixtures thereof.

7. The cooking utensil (1) according to any one of the preceding claims, **characterized in that** the binder resin is selected from polyamide imides (PAIs), polyether imides (PEIs), polyamides (PIs), polyetherketones (PEKs), polyetheretherketones (PEEKs), polyethersulphones (PESs), and polyphenylene sulphides (PPSs) .

8. The cooking utensil (1) according to any one of the preceding claims, **characterized in that** the non-stick coating (4) comprises a primer binding layer (41) and at least one top layer (42), said primer layer (41) and top layer (42, 43), in addition to the continuous sintered network of fluorocarbon resin and optional binder resin, comprising mineral or organic fillers and/or pigments.

9. A method to manufacture a cooking utensil (1) comprising the following steps:
- a) supplying a substrate (2) having the final shape of the cooking utensil with a concave inner face (21) intended to be arranged on the side of food to be placed in said utensil (1), and a convex outer face (22) intended to be arranged on the side of a heat source;
- b) treating the surface of said inner face (21) to obtain a treated inner face (21) adapted for the adhering of a hard base onto the substrate;
- c) forming a hard base (3) adhering to said inner face (21) of said substrate (2), which hard base (3) is a discontinuous layer comprising a surface dispersion of enamel droplets (31) distributed homogeneously over the inner face (21), with a coating rate of the inner face (21) of between 40% and 80%, a surface density of between 300 droplets/mm² and 2000 droplets/mm², and a droplet size of between 2 µm and 50 µm; then
- d) forming a non-stick coating (4) on said hard layer (3) formed during step c), comprising the depositing of at least one layer of composition containing fluorocarbon resin, then curing at a temperature of between 370°C and 430°C;
said method being **characterized in that** step c) of forming of a hard base (3) comprises the following successive steps:
- c1) preparing an aqueous slip of enamel frit, said enamel frit being devoid of lead and cadmium having less than 50 ppm lead and less than 50 ppm cadmium, and containing 30 to 40% by weight of silica and 15 to 30% by weight of titanium oxide, less than 10% by weight of vanadium oxide and less than 4% by weight of lithium oxide relative to the total weight of the frit, said aqueous slip containing at least 20% by weight of mineral fillers relative to the total weight of the slip;
- c2) applying the slip by spraying the slip onto the face (21) of the substrate (2), then drying to form a non-cured enamel layer (3) of homogeneous composition over the entire thickness of the layer;
- c3) curing said enamel layer (3) at a temperature of between 540°C and 580°C for at least 3 minutes, the curing of said enamel layer (3) being conducted before that of said non-stick coating (4).

10. The method according to claim 9, **characterized in that** the slip of enamel frit further comprises:
quartz: 5 to 30%;
SiC: 10 to 30%;
Pigment: 1 to 10%;
Suspension agent: 2 to 10%;
the indicated contents being weight percentages relative to the weight of the frit.

11. The method according to claim 9 or 10, **characterized in that** the application of the slip to the inner face (21) of the substrate (2) is performed by air-assisted spraying with a spray pressure of 4 bars or more and **in that** the quantity of enamel deposited on said inner face lies between 0.07 g/dm² and 0.2 g/dm².

12. The method according to any one of claims 9 to 11, **characterized in that** the enamel frit comprises:
Al₂O₃: less than 1%;
B₂O₃: less than 1%;
BaO: less than 1%;
K₂O: 5 to 20%;
Li₂O: less than 4%;
Na₂O: 10 to 25%;
P₂O₅: less than 4%;
SiO₂: 30 to 40%;
TiO₂: 15 to 30%;
V₂O₅: less than 10%;
the indicated contents being weight percentages relative to the weight of the frit.
